# FASCICULE DE BREVET EUROPEEN

(11) **EP 2 898 767 B1**
(45) Date de publication et mention de la délivrance du brevet: **21.12.2016**
(21) Numéro de dépôt: 14152084.1
(22) Date de dépôt: 22.01.2014
(51) Int. Cl.: A01G 13/06

(54) **Machine pour la production et la diffusion d'air chaud dans les cultures en plein champ**
Maschine zur Erzeugung und Verteilung von warmer Luft in Freilandkulturen
Machine for producing and distributing warm air in open-country crops

(43) Date de publication de la demande: 29.07.2015
(73) Titulaire: Magnetto, Patrice, 82100 Castelsarrasin (FR)
(72) Inventeur: Magnetto, Patrice, 82100 Castelsarrasin (FR)
(74) Mandataire: Ipside

(56) Documents cités:
- FR-A- 1 511 852
- GB-A- 836 374
- US-A- 1 461 247
- US-A- 3 201 098
- US-A- 3 738 798

## Description

### Domaine technique.

La présente invention est du domaine des matériels utilisés pour protéger les plantations de l'action du froid et du gel et concerne plus particulièrement une machine pour la production et la diffusion d'air chaud dans les cultures en plein champ ou sous abri, ces cultures, non limitativement pouvant être des vergers et autres plantations.

### État de la technique antérieure.

On sait que l'action d'un froid trop prononcé tant en hiver qu'au printemps peut détruire les arbres fruitiers ou pour le moins les bourgeons naissants. Pour pallier cet inconvénient et préserver tant qualitativement que quantitativement la récolte à venir, l'art antérieur divulgue des machines de production et de diffusion d'air chaud utilisables dans les vergers afin de réchauffer les couches d'air inférieures et maintenir les arbres fruitiers ou pour le moins leur étage fructifère, à l'abri du gel.

Ainsi on connaît du brevet US 2 602 267 un appareil de chauffage bidirectionnel comportant deux soufflantes, associées chacune à un bruleur. Le bruleur, en considérant le sens d'écoulement de l'air, est disposé en amont de la soufflante. Aucun échangeur de chaleur n'est prévu entre le bruleur et le ventilateur de sorte que ce dernier aspire et propulse une proportion importante de gaz brulés et de résidus de combustion.

On connaît aussi du brevet US 3 201 098 un appareil de chauffage transportable comportant une conduite formant un S doté d'un bruleur à l'une de ses extrémités et d'une soufflante à son autre extrémité. Des perçages radiaux d'admission d'air son pratiqués dans la conduite à faible distance du bruleur. L'inconvénient d'un tel appareil réside dans le fait que la totalité des gaz brulés et des résidus de combustion se retrouvent dans le flux d'air chaud délivré.

On connaît aussi du brevet US 3 210 059 un appareil de chauffage de l'air comprenant dans une enceinte un bruleur et des soufflantes occupant une position aval par rapport au bruleur, la position aval étant définie ici relativement au sens d'écoulement de l'air au travers de l'appareil. Cet appareil refoule par les soufflantes, un air chaud fortement chargé en gaz brulés.

On connaît du brevet FR 1 511 852 un échangeur de température apte à produire et propulser de l'air chaud dans les plantations en vue de préserver les végétaux des gelées. Cet appareil comporte un châssis sur roues sur lequel est installée une turbine comportant un orifice d'aspiration d'air, un orifice de refoulement d'air en relation de communication avec un serpentin installé dans une chambre de combustion. Cette chambre de combustion comporte en partie inférieure un bruleur à flamme verticale, alimenté en fuel-oil par une vanne de sécurité. L'air comburant est prélevé par une conduite au niveau de l'orifice de refoulement de la turbine. Dans cette configuration, la turbine est placée en amont de la chambre de combustion de sorte que le bruleur est alimenté en air froid.

On connaît du brevet US 3 749 551 un réchauffeur d'air principalement destiné au chantiers de construction, comprenant deux soufflantes montées l'une au-dessus de l'autre et une chambre de chauffe en relation de communication avec la sortie d'air des deux soufflantes. Cette chambre de chauffe comporte un bruleur alimenté en carburant liquide ou gazeux. En amont des bruleurs, la chambre de chauffe présente une longueur suffisante pour permettre une combustion complète du carburant.

On connaît du brevet EP845204 une méthode et un appareil pour la prévention du gel en agriculture et arboriculture. L'appareil selon ce brevet comprend une soufflante à une entrée d'air centrale et à deux sorties d'air tangentielles opposées, supérieure et inférieure, aptes à délivrer chacune un flux d'air de direction horizontale. Chaque sortie est associée à un réchauffeur à pétrole ou à gaz liquéfié afin de chauffer le flux d'air délivré en sortie. Selon une variante de réalisation, un bruleur est disposé en amont du ventilateur. La bouche d'aspiration de ce ventilateur reçoit alors un air chaud chargé en gaz brulés et particules solides, lesquels, en raison de leur pouvoir agressif peuvent à la longue corroder les éléments du ventilateur.

### Exposé de l'invention.

### Problème technique.

La plupart des dispositifs décrits plus haut génèrent un air chaud chargé en gaz brulés chargés en particules pouvant être toxiques. Cependant, ces dispositifs offrent un débit d'air chaud relativement important. Le problème de la présence de gaz brulés dans le flux d'air chaud produit ne se retrouve pas dans le dispositif selon le FR 1 511 852 en raison de la présence de l'échangeur de chaleur qui assure une séparation entre les gaz chauds résultant de la combustion et le flux d'air à réchauffer. Cependant, l'échangeur de chaleur, sous forme de serpentin, engendre des pertes de charge qui ne peuvent être compensées que par une augmentation de la puissance motrice requise pour l'entraînement du moteur de la soufflante.

En outre, l'inconvénient des appareils cités réside dans le fait que l'air comburant est admis à température ambiante dans le bruleur ce qui est de nature, en période froide ou en période de gel, à réduire le rendement de l'appareil et à produire une proportion plus importante de gaz imbrulés et par voie de conséquence, de particules solides potentiellement toxiques.

### Solution technique.

La présente invention a pour de résoudre les inconvénients précédemment évoqués en proposant une machine mobile d'un rendement thermique amélioré.

À cet effet la machine mobile selon l'invention, pour la production et la diffusion de flux d'air chaud dans les cultures agricoles en plein champ afin de les protéger de l'agression du gel et du froid, comprenant :
- au moins une soufflante apte à produire au moins un flux d'air, ladite soufflante comprenant une bouche d'aspiration d'air et au moins une bouche de refoulement d'air,
- au moins échangeur de chaleur traversé par le flux d'air à chauffer, ledit échangeur comprenant :
   - au moins un canal d'écoulement du flux d'air à chauffer, doté d'une bouche d'entrée d'air et d'une bouche de sortie d'air,
- au moins une source de chaleur en relation d'échange thermique avec le canal d'écoulement pour y chauffer l'air, ladite source de chaleur étant dotée d'une chambre interne de combustion équipée d'au moins un bruleur doté d'une buse d'alimentation en air comburant et d'une buse d'alimentation en carburant, ladite chambre étant équipée d'une bouche d'évacuation des gaz brulés,
se caractérise essentiellement en ce que la soufflante, en considérant le sens de progression du flux d'air au travers de l'échangeur de chaleur est disposée en aval dudit échangeur et par sa bouche d'aspiration est en relation de communication directe avec la bouche de sortie d'air du canal d'écoulement que comporte l'échangeur et que la buse d'alimentation en air comburant que comporte le bruleur est en relation de communication par l'intermédiaire d'une conduite avec la ou l'une des bouches de refoulement de la soufflante de façon à être alimenté en air chaud sous pression.

La soufflante ou chaque soufflante est maintenant alimentée en air chaud et une faible proportion du flux d'air chaud produit est utilisé pour alimenter en air comburant chaud, le bruleur de la ou de chaque source de chaleur de l'échangeur de chaleur. Une telle disposition qui consiste à préchauffer l'air comburant, est de nature à accroître la qualité de la combustion et est de nature à diminuer, de manière particulièrement significative, la proportion de gaz imbrulés et de particules toxiques.

Selon une autre caractéristique de l'invention, la bouche d'entrée d'air du canal d'écoulement est disposée en partie supérieure de la machine de façon à aspirer les couches d'air les moins froides. En effet, ces couches se situent toujours à quelques mètres au-dessus du sol, tandis que les couches froides se situent au niveau du sol et s'étendent sur une hauteur de quelques dizaines de centimètres. La disposition telle que décrite contribue encore à améliorer le rendement de la machine.

Selon une autre caractéristique de l'invention, la ou chaque bouche de refoulement d'air chaud de la soufflante ou de chaque soufflante, est disposée en partie inférieure, sous l'échangeur de chaleur, afin de délivrer l'air chaud dans les couches d'air inférieures froides. Une telle disposition est de nature à réchauffer ces couches d'air et à créer autour des étages fructifères des arbres une couche d'air protectrice apte à les isoler de la gelée.

Selon une autre caractéristique de l'invention, la ou chaque source de chaleur de l'échangeur est disposée dans le canal d'écoulement du flux d'air. Une telle disposition, comparativement au FR 1 511 852 est de nature à réduire les pertes de charge.

Selon une autre caractéristique de l'invention, le canal d'écoulement du flux d'air que comporte l'échangeur de chaleur s'étend verticalement, tandis que le ou chaque source de chaleur s'étend horizontalement dans ledit canal et est positionnée dans ledit canal de manière à être entourée par le flux d'air à chauffer.

Selon une autre caractéristique de l'invention, l'échangeur de chaleur comporte deux sources de chaleur horizontales espacées horizontalement l'une de l'autre.

Selon une autre caractéristique de l'invention, la ou chaque source de chaleur comporte sur le trajet du flux d'air à chauffer des ailettes externes formant chicanes. Ces ailettes on pour but d'augmenter le trajet du flux d'air dans le canal d'écoulement que comporte l'échangeur.

Selon une autre caractéristique de l'invention, les deux sources de chaleur sont liées mécaniquement l'une à l'autre par des ailettes formant chicanes, toujours pour augmenter le trajet de l'air dans le canal d'écoulement.

Selon une autre caractéristique de l'invention, les deux bruleurs sont alimentés en air comburant chaud par l'intermédiaire d'un caisson de répartition comportant des orifices calibrés de passage d'air. Une telle disposition permet de répartir uniformément l'air comburant sur chaque bruleur.

Selon une autre caractéristique de l'invention, la chambre de combustion de la ou de chaque source de chaleur comporte une ouverture d'évacuation en relation de communication avec le canal d'écoulement et un déflecteur disposé entre le bruleur et l'ouverture d'évacuation et s'étendant horizontalement dans ladite chambre parallèlement à la direction de la flamme produite par le bruleur. Une telle disposition permet d'augmenter tant le trajet que le séjour des gaz dans la chambre de combustion et également de chauffer uniformément les parois métalliques de la source de chaleur.

Selon une autre caractéristique de l'invention, la machine comporte deux soufflantes disposées côte à côte, aptes à délivrer deux flux d'air chaud de directions horizontales et de sens opposés orientés pour l'un latéralement à gauche de la machine en considérant son sens d'avancement et pour l'autre latéralement à droite. Une telle disposition, lorsque la machine est entraînée dans les inter-rangs permet de diriger un air chaud simultanément sur les rangées de plantation bordant les inter-rangs.

### Bref exposé des figures et des dessins.

D'autres avantages, buts et caractéristiques de l'invention apparaîtront à la lecture de la description d'une forme préférée de réalisation, donnée à titre d'exemple non limitatif en se référant aux dessins annexés en lesquels :

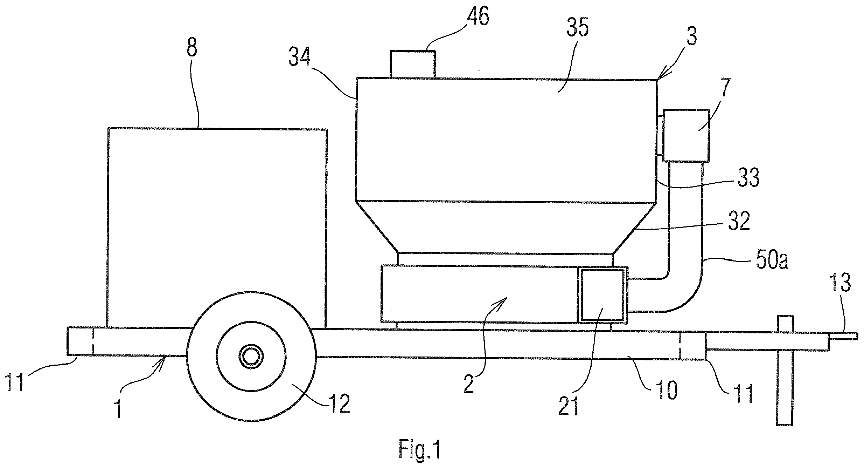

- la figure 1 est une vue de gauche d'une machine conforme à l'invention,

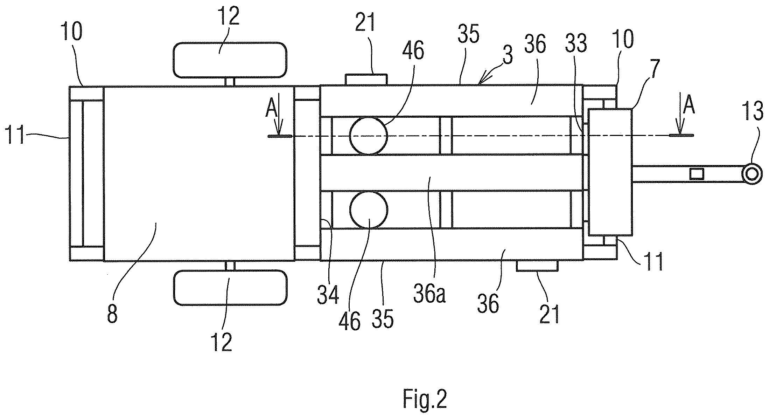

- la figure 2 est une vue de dessus d'une machine conforme à l'invention,

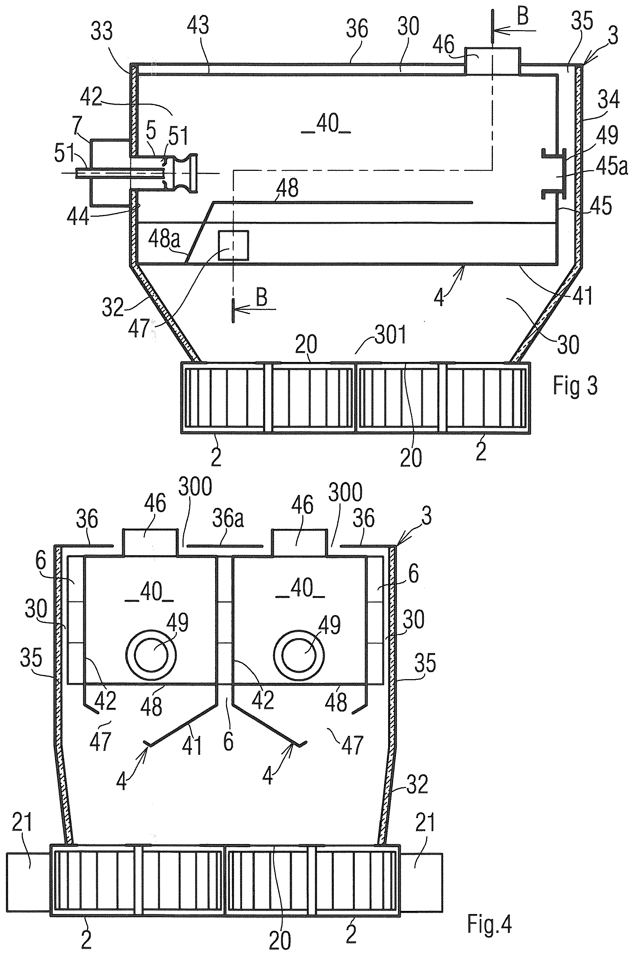

- la figure 3 est une vue en coupe longitudinale d'une machine selon l'invention selon la ligne AA de la figure 2, le châssis n'étant pas représenté sur cette vue,
- la figure 4 est une vue en coupe transversale de la machine selon la ligne BB de la figure 3,

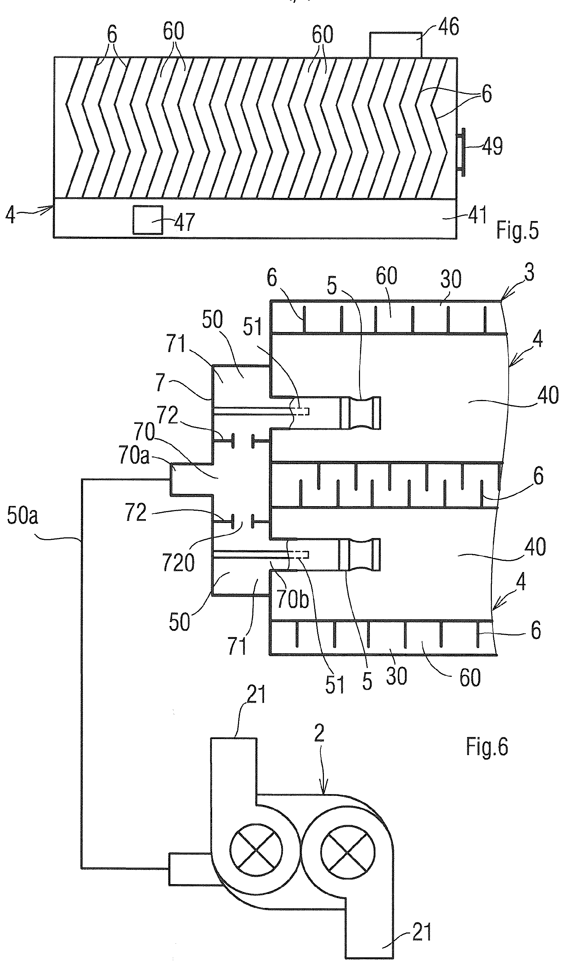

- la figure 5 est une vue en plan d'une source de chaleur,
- la figure 6 est une vue schématique d'une machine selon l'invention.

### Meilleure manière de réaliser l'invention.

Telle que représentée, la machine selon l'invention, pour la diffusion d'au moins un flux d'air chaud, est principalement utilisable en période froide, dans des plantations agricoles, pour maintenir les plantes à l'abri de l'action du gel. Plus précisément, en période froide la machine est utilisée pour diffuser au moins un flux d'air chaud au-dessus et/ou autour des plantations afin de former des couches d'air chaud propices à isoler ces plantations de l'action du froid et du gel. Préférentiellement, la diffusion du flux d'air chaud est opérée simultanément au déplacement de la machine le long des plantations.

La machine selon l'invention, comprend un châssis quadrangulaire 1 métallique, formé par assemblage de longerons horizontaux latéraux 10 et de traverses horizontales 11 avant et arrière. Ce châssis est monté sur au moins un essieu, recevant de manière connue, des organes de roulement 12. A la traverse avant du châssis 1 est fixé un timon 13 d'attelage à un véhicule tracteur, non représenté.

La machine selon l'invention, comporte sur le châssis 1 tel que décrit, au moins une soufflante 2 dotée d'une bouche 20 d'aspiration d'un flux d'air et d'au moins une bouche 21 de refoulement de ce flux d'air. En association avec la soufflante 2, la machine comporte un échangeur de chaleur 3 monté au dessus de la ou de chaque soufflante 2, cet échangeur de chaleur 3 comportant un canal d'écoulement d'air 30, traversant, s'étendant verticalement entre au moins une bouche d'aspiration d'air supérieure 300 et une bouche de refoulement d'air inférieure 301. Cette bouche de refoulement d'air est en relation de communication avec la bouche d'aspiration 20 de la ou de chaque soufflante 2. Ainsi la soufflante 2 force l'écoulement du flux d'air dans le canal traversant 30 de l'échangeur 3 afin que ce flux d'air y soit chauffé par une source de chaleur 4 montée dans ce canal 30.

Dans la forme préférée de réalisation, la ou chaque soufflante 2 est apte à délivrer un flux d'air chaud dont la direction est horizontale et transversale à la direction de progression de la machine. Avantageusement, la machine est dotée de deux soufflantes 2, jumelées, afin de produire selon un niveau de hauteur commun, inférieur, deux flux d'air chaud latéraux, opposés l'un à l'autre. Ainsi, en considérant le sens d'avancement de la machine, les deux soufflantes 2 produisent pour l'une un flux d'air chaud orienté à gauche et pour l'autre, un flux d'air chaud orienté à droite.

La ou chaque soufflante 2 et plus particulièrement le rotor à pales de cette dernière est entraîné en rotation par un moyen moteur. Ce moyen moteur, sans que cela soit limitatif, peut être constitué par une transmission de mouvement en prise avec le rotor de la ou ce chaque soufflante et par la prise de force du véhicule tracteur.

Selon la forme préférée de réalisation, l'échangeur de chaleur 3 est formé d'un caisson métallique, substantiellement parallélépipédique, définissant le canal 30 d'écoulement du flux d'air. Ce caisson comporte une ossature métallique portant une paroi de fond 32 agencée en trémie et quatre parois verticales perpendiculaires deux à deux, à savoir une paroi avant 33, une paroi arrière 34, parallèle et opposée à la précédente et deux parois latérales 35. La paroi de fond 32 comporte une ouverture centrale traversante, formant la bouche inférieure 301 de sortie du flux d'air. La bouche supérieure 300 est délimitée par les bords supérieurs horizontaux des parois verticales 33, 34, 35.

La ou chaque source de chaleur 4 s'étend horizontalement dans le canal d'écoulement et est fixée à l'ossature du caisson constitutif de l'échangeur de chaleur et ce à écartement des parois latérales 35 de ce dernier. De préférence, la ou chaque source de chaleur est écartée de la paroi de arrière 34 de l'échangeur de chaleur.

La ou chaque source de chaleur 4 est formée par un foyer métallique fermé déterminant une chambre de combustion 40 équipée d'au moins un bruleur 5 doté d'une buse d'alimentation 50 en air comburant chaud et d'une buse 51 d'alimentation en carburant liquide, ladite chambre de combustion 40 étant équipée d'une bouche supérieure 46 d'évacuation des gaz brulés. Comme on peut le voir, cette bouche d'évacuation 46 est formé d'un conduit cylindrique. Ce conduit cylindrique vertical est transversal au plan horizontal que détermine la bouche supérieure d'aspiration d'air 300 et de préférence est écarté des bordures de ladite bouche.

Le ou chaque foyer ou source de chaleur 4 est formée essentiellement par assemblage de plusieurs parois métalliques conductrices de la chaleur, à savoir une paroi inférieure 41 agencée en dièdre, deux parois latérales, verticales 42 parallèles, et opposées, une paroi supérieure horizontale 43, une paroi avant 44 et une paroi arrière 45, ces différentes parois définissant la chambre interne de combustion 40.

A la paroi avant 44 de la source de chaleur est fixé le bruleur 5. Ce bruleur 5 est engagé dans un perçage traversant formé dans la paroi avant 33 du caisson que forme l'échangeur de chaleur et dans un perçage traversant formé dans la paroi avant 44 de la source de chaleur 4. Ce bruleur s'étend horizontalement dans la chambre de combustion 40, la flamme produite étant horizontale et orientée vers la paroi arrière 45 de la source de chaleur.

De manière originale, la buse 50 d'alimentation en comburant du bruleur 5 est alimentée en air chaud de façon à réduire la proportion d'imbrulés. A cet effet, une faible partie du flux d'air chaud, en amont de la bouche délivrance 21 de la soufflante 2 ou de l'une des soufflantes, est dérivée vers la buse 50 du bruleur 5 par une conduite appropriée 50a. Ainsi la combustion du carburant dans la chambre de combustion 40 de la source de chaleur 4 se trouve grandement améliorée.

Préférentiellement, le carburant utilisé est du gazole et la buse 51 d'alimentation en carburant est alimentée par une pompe à injection, connue en soi, actionnée par un moyen moteur essentiellement constitué par une transmission de mouvement et par la prise de force du véhicule tracteur.

Le carburant est stocké dans un réservoir 8 installé sur le châssis de la machine et est raccordé à la pompe par l'intermédiaire d'une conduite appropriée. L'intérêt de l'utilisation du gazole pour ce type de machine est sa facilité de stockage et son point d'inflammation relativement élevé qui permet son transport en toute sécurité.

La flamme produite dans la chambre de combustion 40 se développe horizontalement et peut venir frapper la paroi arrière 45 de la source de chaleur 4. L'action répétée de la flamme sur cette paroi arrière 45 peut conduire à une détérioration plus ou moins prononcée de cette paroi. Pour écarter ce risque, la paroi arrière 45, dans l'axe de la flamme, et donc du bruleur 5, présente un perçage traversant 45a associé à un écran arrière 49. Cet écran arrière 49 est écarté du perçage 45a et en considérant le sens de progression de la flamme est disposé en aval dudit perçage. Cet écran sous forme de disque en matériau réfractaire, est porté par trois pattes équidistantes fixées à la paroi arrière 45.

Dans la forme préférée de réalisation, le bruleur 5 est installé dans la zone supérieure de la chambre de combustion 40 et cette dernière, dans sa zone inférieure, au plus prés de la paroi avant 44, comporte une ouverture d'évacuation 47 en relation de communication avec le canal d'écoulement 30. En combinaison avec ces caractéristiques, un déflecteur 48 sensiblement horizontal, est disposé dans la chambre de combustion 40 entre les zones supérieure et inférieure de cette chambre. Ce déflecteur 48 est au contact des parois latérales 42 de la source de chaleur 4 et est écarté de la paroi arrière 45 de façon à laisser libre un passage de gaz depuis la zone supérieure vers la zone inférieure de la chambre de combustion 40. Dans l'exemple de réalisation, le déflecteur 48 comporte une aile 48a de fixation à la paroi inférieure 41. La partie inférieure de la chambre de combustion est soumise à dépression en raison de sa communication avec le canal d'écoulement 30. Du fait de cette dépression, une partie de la flamme est aspirée vers l'ouverture d'évacuation 47 en contournant le déflecteur 48. De cette façon une partie de la flamme est forcée à balayer la zone supérieure et la zone inférieure de la chambre de combustion 40 ce qui assure une répartition uniforme de la chaleur dans la chambre 40 et permet de chauffer uniformément, notamment, les parois latérales métalliques 42 de la source de chaleur 4.

Avantageusement, la bouche d'entrée d'air 300 reçoit au moins deux déflecteurs 36 plans, horizontaux, formant deux écrans latéraux au-dessus et à faible distance de la paroi supérieure 43 de la source de chaleur 4. Chaque déflecteur latéral 36 prend appui sur les rives horizontales supérieures des parois avant 33 et arrière 34 et sur la rive horizontale supérieure de la paroi latérale 35 correspondante. La bouche d'évacuation 46 est engagée entre les deux déflecteurs 36 et se situe par sa partie supérieure au-dessus de la bouche 300. La paroi supérieure 43 de la source de chaleur 4 est donc recouverte partiellement par les deux déflecteurs latéraux 36. Ces dispositions forcent l'air aspiré à balayer la paroi supérieure métallique 43 de la source de chaleur 4 et par voie de conséquence vise à accroître l'importance de l'échange thermique entre la source de chaleur 4 et le flux d'air.

De préférence, entre la ou chaque source de chaleur 4 et les parois latérales 35 de l'échangeur de chaleur 3, sont disposées des ailettes radiantes, métalliques 6, thermiquement conductrices. Ces ailettes 6 sont intimement en contact avec les parois latérales 42 de la source de chaleur 4, sont régulièrement écartées les unes des autres, et forment en combinaison les unes avec les autres, une série de chicanes 60. Grâce à ces chicanes 60, le trajet du flux d'air au travers de l'échangeur 3 et donc le temps de séjour de l'air dans l'échangeur de chaleur 3 se trouvent augmentés. De cette manière, est augmentée l'importance du transfert thermique entre la source de chaleur 4 et le flux d'air.

Comme on le comprend, chaque chicane 60 est formée par l'intervalle entre deux ailettes 6 consécutives.

Selon un exemple pratique de réalisation, chaque ailette 6 épouse sensiblement le profil d'un Z, les chicanes formées épousant alors une forme de Z.

Selon une forme préférée de réalisation, l'échangeur de chaleur 3 est équipé de deux sources de chaleur 4, parallèles, écartées l'une de l'autre et disposées selon un même niveau de hauteur dans le canal d'écoulement 30. Ces deux sources de chaleur 4, préférentiellement identiques, sont réunies mécaniquement l'une à l'autre par des ailettes radiantes, métalliques 6, régulièrement espacées, formant des chicanes 60 afin d'augmenter le trajet du flux d'air dans l'échangeur et son temps de séjour. Toujours selon cette forme de réalisation, la bouche 300 est équipée de deux déflecteurs latéraux 36 formant écran et d'un déflecteur central 36a formant également écran. Ce déflecteur central 36a s'étend entre les deux parois avant 33 et arrière 34 de l'échangeur de chaleur, est disposé au-dessus de l'intervalle entre les deux sources de chaleur 4 et recouvre ledit intervalle. Ce déflecteur central 36a est également disposé au-dessus et à distance de la paroi supérieure 43 de chaque source de chaleur. Ainsi la paroi supérieure 43 de chaque source de chaleur 4 est recouverte en partie par un déflecteur latéral 36 et par le déflecteur central 36a. La bouche d'évacuation 46 est disposée entre le déflecteur médian 36a et le déflecteur latéral 36 correspondant. La zone centrale de la paroi supérieure 43 de chaque source de chaleur n'est pas recouverte par les déflecteurs 36 et 36a. Ces dispositions ont pour but de forcer l'air aspiré à balayer la paroi supérieure métallique 43 de la source de chaleur 4 et vise à augmenter l'importance de l'échange thermique entre la source de chaleur 4 et le flux d'air.

Selon cette forme de réalisation de deux sources de chaleur 4, la pompe à injection de carburant est commune aux deux sources de chaleur 4. Alternativement, chaque source de chaleur 4 possède sa propre pompe à injection de carburant.

Toujours selon cette forme de réalisation, les deux sources de chaleur 4 sont alimentées en air chaud comburant par un caisson de répartition commun 7 de préférence de forme parallélépipédique. Selon une forme pratique de réalisation, ce caisson de répartition 7 est doté d'une bouche 70a d'alimentation en air chaud sous pression et de deux bouches 70b de délivrance d'air chaud sous pression, en relation de communication pour l'une, avec la buse 50 de l'un des bruleurs 5 et pour l'autre avec la buse 50 de l'autre bruleur 15.

Le caisson de répartition 7 comprend une chambre interne centrale 70 dans laquelle débouche l'air chaud sous pression et deux chambres latérales de distribution d'air chaud 71 en communication avec la chambre centrale 70 chacune au travers d'un passage calibré 720. Plus précisément, le caisson de répartition 7, comporte deux cloisons internes 72 parallèles, délimitant la chambre centrale 70 ainsi que les deux chambres latérales 71. Les passages calibrés 720 sont pratiqués dans ces cloisons 72. Chaque chambre latérale 71 est en relation de communication avec la buse correspondante 50 d'alimentation en air chaud comburant par un perçage pratiqué dans l'une des parois du caisson de répartition 7.

Enfin une isolation thermique appropriée, sous forme de panneaux de laine de roche, pourra être disposée entre les parois du caisson formant l'échangeur de chaleur 3 et la ou chaque source de chaleur 4. Plus particulièrement, une couche d'isolation thermique sera disposée entre la paroi avant 44 de la ou de chaque source de chaleur et la paroi avant du caisson que forme l'échangeur de chaleur 3.

Il va de soi que la présente invention peut recevoir tous aménagements et variantes du domaine des équivalents techniques sans pour autant sortir du cadre du présent brevet tel que défini par les revendications ci-après.

## Revendications

1. Machine pour la production et la diffusion de flux d'air chaud dans les cultures agricoles en plein champ afin de les protéger de l'agression du gel et du froid, comprenant :
- au moins une soufflante (2) apte à produire au moins un flux d'air, ladite soufflante comprenant une bouche d'aspiration d'air (20) et au moins une bouche de refoulement d'air (21),
- au moins un échangeur de chaleur(3) traversé par un flux d'air à chauffer, comprenant :
- au moins un canal (30) d'écoulement d'un flux d'air à chauffer doté d'une bouche d'entrée d'air (300) et d'une bouche de sortie d'air (301),
- au moins une source de chaleur (4) en relation d'échange thermique avec le canal (30) d'écoulement du flux d'air, ladite source de chaleur (4) comprenant une chambre de combustion interne (40) équipée d'au moins un bruleur (5) comprenant une buse (50) d'alimentation en air comburant et une buse (51) d'alimentation en carburant, ladite chambre (40) étant équipée d'une bouche (46) d'évacuation des gaz brulés,
**caractérisée en ce que** la ou chaque soufflante (2), en considérant le sens de progression du flux d'air au travers de l'échangeur de chaleur (3), est disposée en aval dudit échangeur et, par sa bouche d'aspiration (20) , est en relation de communication directe avec la bouche (301) de sortie d'air du canal (30) d'écoulement que comporte l'échangeur de chaleur (3), et que la buse d'alimentation (50) en air comburant que comporte le bruleur (5) est en relation de communication par l'intermédiaire d'une conduite (50a) avec la ou l'une des bouches de refoulement (21) de la soufflante (2), de façon à être alimentée en air chaud par cette dernière.

2. Machine selon la revendication précédente, **caractérisée en ce que** la bouche d'entrée d'air (300) du canal d'écoulement (30) est disposée en partie supérieure de façon à aspirer les couches d'air les moins froides.

3. Machine selon la revendication 1 ou la revendication 2, **caractérisée en ce que** la ou chaque bouche (21) de refoulement d'air chaud de la soufflante (2) ou de chaque soufflante (2), est disposée en partie inférieure, sous l'échangeur de chaleur (3), afin de délivrer l'air chaud dans les couches d'air inférieures froides.

4. Machine selon l'une quelconque des revendications précédentes, **caractérisée en ce que** le canal d'écoulement (30) du flux d'air que comporte l'échangeur (3) s'étend verticalement, tandis que le ou chaque source de chaleur (4) s'étend horizontalement dans ledit canal (30) et est positionnée dans ledit canal (30) de manière à être entourée par le flux d'air à chauffer.

5. Machine selon l'une quelconque des revendications précédentes, **caractérisée en ce que** la ou chaque source de chaleur (4) est formée par assemblage de plusieurs parois métalliques conductrices de la chaleur, à savoir une paroi inférieure horizontale (41) agencée en dièdre, deux parois latérales, verticales (42) parallèles, et opposées, une paroi supérieure horizontale (43), une paroi avant (44) et une paroi arrière (45), ces différentes parois définissant la chambre interne de combustion (40), le bruleur (5) étant fixé à la paroi avant (44).

6. Machine selon la revendication précédente, **caractérisée en ce que** le bruleur (5) de la ou de chaque source de chaleur est installé dans la zone supérieure de la chambre de combustion (40) de ladite source de chaleur (4), que ladite source de chaleur (4) dans sa zone inférieure, au plus près d'une paroi avant (44) qu'elle comporte, est dotée d'une ouverture d'évacuation (47) en relation de communication avec le canal d'écoulement (30), qu'un déflecteur (48), sensiblement horizontal, est disposé dans la chambre de combustion (40) entre les zones supérieure et inférieure de cette dernière et que ce déflecteur (48) est au contact des parois latérales (42) de la source de chaleur et est écarté de la paroi arrière (45) de façon à laisser libre un passage de gaz.

7. Machine selon la revendication 5 ou la revendication 6, **caractérisée en ce que** la paroi arrière (45) de la source de chaleur (4), dans l'axe du bruleur (5) présente un perçage traversant (45a) associé à un écran arrière (49), ledit écran arrière 49 étant écarté du perçage (45a) et en considérant le sens de progression de la flamme, étant disposé en aval dudit perçage.

8. Machine selon l'une quelconque des revendications précédentes, **caractérisée en ce qu'**entre la ou chaque source de chaleur (4) et les parois latérales (35) de l'échangeur de chaleur (3), sont disposées des ailettes radiantes, métalliques (6), thermiquement conductrices, intimement en contact avec les parois latérales (42) de la source de chaleur, formant en combinaison les unes avec les autres, une série de chicanes (60) pour augmenter le trajet du flux d'air dans l'échangeur de chaleur (3).

9. Machine selon l'une quelconque des revendications précédentes, **caractérisée en ce que** l'échangeur de chaleur (3) est équipé de deux sources de chaleur (4), parallèles, écartées l'une de l'autre et disposées selon un même niveau de hauteur dans le canal d'écoulement (30).

10. Machine selon la revendication précédente, **caractérisée en ce que** les deux sources de chaleur (4) sont réunies mécaniquement l'une à l'autre par des ailettes radiantes, métalliques (6), régulièrement espacées formant des chicanes (60) afin d'augmenter le trajet du flux d'air dans l'échangeur de chaleur (3).

11. Machine selon l'une quelconque des revendications précédentes, **caractérisée en ce que** la bouche d'entrée d'air (300) du canal d'écoulement (30) reçoit au moins deux déflecteurs (36) formant deux écrans latéraux.

12. Machine selon les revendications 10 et 11 prises ensemble, **caractérisée en ce que** la bouche (300) est équipée de deux déflecteurs latéraux (36) et d'un déflecteur central (36a) disposé au-dessus de l'intervalle entre les deux sources de chaleur (4) et recouvrant ledit intervalle.

13. Machine selon l'une quelconque des revendications 9 à 12, **caractérisée en ce que** les deux sources de chaleur (4) sont alimentées en air chaud comburant par un caisson de répartition commun (7).

14. Machine selon l'une quelconque des revendications précédentes **caractérisée en ce que** la buse (51) du ou de chaque bruleur (5) est alimentée en carburant liquide par une pompe à injection, raccordée à un réservoir (8) de carburant liquide installé sur le châssis de la machine.

## Patentansprüche

1. Maschine zur Erzeugung und Verteilung eines Warmluftstroms in den Freilandkulturen, um sie vor den Aggressionen von Frost und Kälte zu schützen, die Folgendes umfasst:
- mindestens ein Gebläse (2), das geeignet ist, um mindestens einen Luftstrom zu erzeugen, wobei das Gebläse eine Luftansaugöffnung (20) und mindestens eine Luftförderöffnung (21) umfasst,
- mindestens einen Wärmeaustauscher (3), der von einem zu wärmenden Luftstrom durchquert wird, der Folgendes umfasst:
- mindestens einen Strömungskanal (30) eines zu wärmenden Luftstroms, der mit einer Eingangsluftöffnung (300) und einer Ausgangsluftöffnung (301) versehen ist,
- mindestens eine Wärmequelle (4) in Wärmeaustauschverbindung mit dem Strömungskanal (30) des Luftstroms, wobei die Wärmequelle (4) eine innere Brennkammer (40) umfasst, die mit mindestens einem Brenner (5) ausgestattet ist, der eine Düse (50) zur Versorgung mit Verbrennungsluft und eine Düse (51) zur Versorgung mit Brennstoff umfasst, wobei die Kammer (40) mit einer Auslassöffnung (46) der verbrannten Gase ausgestattet ist,
**dadurch gekennzeichnet, dass** das oder jedes Gebläse (2) unter Berücksichtigung der Richtung des Fortschreitens des Luftstroms durch den Wärmeaustauscher (3) stromabwärts des Austauschers angeordnet ist und durch seine Ansaugöffnung (20) in direkter Kommunikationsverbindung mit der Luftausgangsöffnung (301) des Strömungskanals (30) ist, die der Wärmeaustauscher (3) umfasst, und dass die Versorgungsdüse (50) mit Verbrennungsluft, die der Brenner (5) umfasst, über eine Leitung (50a) mit der oder einer der Förderöffnungen (21) des Gebläses (2) in Kommunikationsverbindung ist, um von dieser Letzteren mit Warmluft versorgt zu werden.

2. Maschine nach dem vorhergehenden Anspruch, **dadurch gekennzeichnet, dass** die Lufteingangsöffnung (300) des Strömungskanals (30) im oberen Teil derart angeordnet ist, dass sie die am wenigsten kalten Luftschichten ansaugt.

3. Maschine nach Anspruch 1 oder Anspruch 2, **dadurch gekennzeichnet, dass** die oder jede Warmluftförderöffnung (21) des Gebläses (2) oder jedes Gebläses (2) im unteren Teil unter dem Wärmeaustauscher (3) angeordnet ist, um Warmluft in die unteren kalten Luftschichten zu liefern.

4. Maschine nach einem der vorhergehenden Ansprüche, **dadurch gekennzeichnet, dass** sich der Strömungskanal (30) des Luftstroms, den der Austauscher (3) umfasst, vertikal erstreckt, während sich die oder jede Wärmequelle (4) horizontal in dem Kanal (30) erstreckt und in dem Kanal (30) derart positioniert ist, dass sie von dem zu wärmenden Luftstrom umgeben ist.

5. Maschine nach einem der vorhergehenden Ansprüche, **dadurch gekennzeichnet, dass** die oder jede Wärmequelle (4) durch Zusammenfügen mehrerer wärmeleitender Metallwände gebildet ist, nämlich einer unteren horizontalen Wand (41), die als Dieder angeordnet ist, zwei seitlichen vertikalen parallelen und entgegengesetzten Wänden (42), einer oberen horizontalen Wand (43), einer vorderen Wand (44) und einer hinteren Wand (45), wobei diese unterschiedlichen Wände die innere Brennkammer (40) definieren, wobei der Brenner (5) an der vorderen Wand (44) befestigt ist.

6. Maschine nach dem vorhergehenden Anspruch, **dadurch gekennzeichnet, dass** der Brenner (5) der oder jeder Wärmequelle in dem oberen Bereich der Brennkammer (40) der Wärmequelle (4) installiert ist, wobei die Wärmequelle (4) in ihrem unteren Bereich, einer vorderen Wand (44), die sie umfasst, am nächsten liegend mit einer Auslassöffnung (47) in Kommunikationsverbindung mit dem Strömungskanal (30) versehen ist, dass ein Ablenker (48), der im Wesentlichen horizontal ist, in der Brennkammer (40) zwischen dem oberen Bereich und dem unteren Bereich dieser Letzteren angeordnet ist, und dass dieser Ablenker (48) mit seitlichen Wänden (42) der Wärmequelle in Berührung ist und von der hinteren Wand (45) derart beabstandet ist, dass eine Gaspassage freigelassen wird.

7. Maschine nach Anspruch 5 oder Anspruch 6, **dadurch gekennzeichnet, dass** die hintere Wand (45) der Wärmequelle (4) in der Achse des Brenners (5) eine durchgehende Bohrung (45a) umfasst, die mit einer hinteren Abschirmung (49) assoziiert ist, wobei die hintere Abschirmung (49) von der Bohrung (45a) beabstandet ist und unter Berücksichtigung der Richtung des Fortschreitens der Flamme stromabwärts der Bohrung angeordnet ist.

8. Maschine nach einem der vorhergehenden Ansprüche, **dadurch gekennzeichnet, dass** zwischen der oder jeder Wärmequelle (4) und den seitlichen Wänden (35) des Wärmeaustauschers (3) strahlende, metallische Rippen (6), die wärmeleitend sind, in enger Berührung mit den seitlichen Wänden (42) der Wärmequelle angeordnet sind, die in Kombination miteinander eine Reihe von Schikanen (60) bilden, um den Verlauf des Luftstroms in dem Wärmeaustauscher (3) zu vergrößern.

9. Maschine nach einem der vorhergehenden Ansprüche, **dadurch gekennzeichnet, dass** der Wärmeaustauscher (3) mit zwei parallelen, voneinander beabstandeten und entlang desselben Höhenniveaus in dem Strömungskanal (30) angeordneten Wärmequellen (4) ausgestattet ist.

10. Maschine nach dem vorhergehenden Anspruch, **dadurch gekennzeichnet, dass** die zwei Wärmequellen (4) mechanisch miteinander durch strahlende, metallische, regelmäßig beabstandete Rippen (6) verbunden sind, die Schikanen (60) bilden, um den Verlauf des Luftstroms in dem Wärmeaustauscher (3) zu vergrößern.

11. Maschine nach einem der vorhergehenden Ansprüche, **dadurch gekennzeichnet, dass** die Lufteinlassöffnung (300) des Strömungskanals (30) mindestens zwei Ablenker (36), die zwei seitliche Abschirmungen bilden, erhält.

12. Maschine nach den Ansprüchen 10 und 11 gemeinsam genommen, **dadurch gekennzeichnet, dass** die Öffnung (300) mit zwei seitlichen Ablenkern (36) und einem zentralen Ablenker (36a), der oberhalb des Abstands zwischen den zwei Wärmequellen (4) angeordnet ist und den Abstand abdeckt, ausgestattet ist.

13. Maschine nach einem der Ansprüche 9 bis 12, **dadurch gekennzeichnet, dass** die zwei Wärmequellen (4) mit warmer Verbrennungsluft durch einen gemeinsamen Verteilerkasten (7) versorgt sind.

14. Maschine nach einem der vorhergehenden Ansprüche, **dadurch gekennzeichnet, dass** die Düse (51) des oder jedes Brenners (5) mit Flüssigbrennstoff von einer Einspritzpumpe, die an einen Flüssigbrennstofftank (8) angeschlossen ist, der auf dem Chassis der Maschine installiert ist, versorgt wird.

## Claims

1. Machine for producing and distributing a stream of warm air in open-country agricultural crops in order to protect' them against frost and cold, and comprising:
- at least one blower (2) able to produce at least one stream of air, the said blower comprising an air suction intake (20) and at least one air delivery outlet (21),
- at least one heat exchanger (3) through which a stream of air that is to be heated passes, comprising:
- at least one flow canal (30) for a stream of air that is to be heated, provided with an air inlet (300) and with an air outlet (301),
- at least one heat source (4) in a heat exchange relationship with the flow canal (30) for the stream of air, the said heat source (4) comprising an internal combustion chamber (40) equipped with at least one burner (5) comprising an oxidizing-air supply nozzle (50) and a fuel supply nozzle (51), the said chamber (40) being equipped with a burnt gas discharge outlet (46),
**characterized in that** the or each blower (2), when considering the direction in which the stream of air progresses through the heat exchanger (3), is arranged downstream of the said exchanger and, via its suction intake (20) is in direct communication with the air outlet (301) of the flow canal (30) that the heat exchanger (3) comprises,
and **in that** the oxidizing-air supply nozzle (50) that the burner (5) comprises is in communication via a duct (50a) with the or one of the delivery outlets (21) of the blower (2), so as to be supplied with warm air by the latter.

2. Machine according to the preceding claim, **characterized in that** the air inlet (300) of the flow canal (30) is arranged in an upper part so as to take in air from the least-cold strata.

3. Machine according to Claim 1 or Claim 2, **characterized in that** the or each warm air delivery outlet (21) of the blower (2) or of each blower (2) is arranged in a lower part, beneath the heat exchanger (3), so as to deliver the warm air to the cold lower air strata.

4. Machine according to any one of the preceding claims, **characterized in that** the flow canal (30) for the stream of air that the exchanger (3) comprises extends vertically, whereas the or each heat source (4) extends horizontally in the said canal (30) and is positioned in the said canal (30) in such a way as to be surrounded by the stream of air that is to be heated.

5. Machine according to any one of the preceding claims, **characterized in that** the or each heat source (4) is formed of the assembly of several heat-conducting metallic walls, namely a horizontal lower wall (41) arranged as a dihedron, two lateral walls (42) that are vertical, parallel and opposite, a horizontal upper wall (43), a front wall (44) and a rear wall (45), these various walls defining the internal combustion chamber (40), the burner (5) being fixed to the front wall (44).

6. Machine according to the preceding claim, **characterized in that** the burner (5) of the or each heat source is installed in the upper zone of the combustion chamber (40) of the said heat source (4), that the said heat source (4) in its lower zone, as close as possible to a front wall (44) that it comprises, is provided with a discharge opening (47) in communication with the flow canal (30), that a substantially horizontal deflector (48) is arranged in the combustion chamber (40) between the upper and lower zones thereof and that this deflector (48) is in contact with the lateral walls (42) of the heat source and is spaced away from the rear wall (45) in order to leave a passage free for gas.

7. Machine according to Claim 5 or Claim 6, **characterized in that** the rear wall (45) of the heat source (4), on the axis of the burner (5), has a through-hole (45a) associated with a rear screen (49), the said rear screen (49) being spaced away from the hole (45a) and, when considering the direction in which the flame progresses, is arranged downstream of the said hole.

8. Machine according to any one of the preceding claims, **characterized in that** between the or each heat source (4) and the lateral walls (3) of the heat exchanger (3) there are thermally conductive metallic radiant fins (6) in intimate contact with the lateral walls (42) of the heat source and in combination with one another forming a series of baffles (60) to lengthen the path of the stream of air through the heat exchanger (3).

9. Machine according to any one of the preceding claims, **characterized in that** the heat exchanger (3) is equipped with two parallel heat sources (4) spaced away from one another and arranged at the same level heightwise in the flow canal (30).

10. Machine according to the preceding claim, **characterized in that** the two heat sources (4) are mechanically connected to one another by uniformly spaced metallic radiant fins (6) forming baffles (60) in order to lengthen the path of the stream of air through the heat exchanger (3).

11. Machine according to any one of the preceding claims, **characterized in that** the air inlet (300) of the flow canal (30) accommodates at least two deflectors (36) forming two lateral screens.

12. Machine according to Claims 10 and 11 considered together, **characterized in that** the outlet (300) is equipped with two lateral deflectors (36) and with one central deflector (36a) arranged above the gap between the two heat sources (4) and covering the said gap.

13. Machine according to any one of Claims 9 to 12, **characterized in that** the two heat sources (4) are supplied with oxidizing warm air by a common distribution housing (7).

14. Machine according to any one of the preceding claims, **characterized in that** the nozzle (51) of the or each burner (5) is supplied with liquid fuel by an injection pump connected to a tank (8) of liquid fuel that is installed on the chassis of the machine.
